# EUROPEAN PATENT SPECIFICATION

(11) **EP 2 841 387 B1**
(45) Date of publication and mention of the grant of the patent: **16.11.2016**
(21) Application number: 13720335.2
(22) Date of filing: 26.04.2013
(51) Int. Cl.: C03C 25/24, E04B 1/76, C03C 25/42, C09J 161/06

(54) **PROCESS FOR THE PRODUCTION OF A PHENOL-FORMALDEHYDE RESIN HAVING LOW FREE-FORMALDEHYDE CONTENT, THE PHENOL-FORMALDEHYDE RESIN RESULTING FROM THIS PROCESS, AND ITS USE AS A BINDER FOR MINERAL WOOL INSULATION PRODUCTS**
VERFAHREN ZUR HERSTELLUNG EINES PHENOL-FORMALDEHYDHARZES, MIT GERINGEM FREIEM FORMALDEHYDGEHALT, PHENOL-FORMALDEHYDHARZ AUS DIESEM VERFAHREN UND SEINE VERWENDUNG ALS BINDEMITTEL FÜR MINERALWOLLE-DÄMMSTOFFE
PROCÉDÉ POUR LA PRODUCTION D'UNE RÉSINE PHÉNOL-FORMALDÉHYDE AYANT UNE FAIBLE TENEUR EN FORMALDÉHYDE LIBRE, LA RÉSINE DE PHÉNOL-FORMALDÉHYDE RÉSULTANT DE CE PROCÉDÉ ET SON UTILISATION EN TANT QUE LIANT POUR DES PRODUITS D'ISOLATION EN LAINE MINÉRALE

(30) Priority: 27.04.2012 EP 12165943
(43) Date of publication of application: 04.03.2015
(73) Proprietor: URSA Insulation, S.A., 28004 Madrid (ES)
(72) Inventor: CASTRO-CABADO, Maria Mercedes, E-28050 Madrid (ES); SANCHEZ PERUCHA, Alejandro, 04157 Leipzig (ES); AZNAR ÉCIJA, Ana Isabel, E-43004 Tarragona (ES); CASADO DOMINGUEZ, Arturo Luis, E-28680 Paracuellos de Jarama Madrid (ES)
(74) Representative: Hoffmann Eitle
(86) International application number: PCT/EP2013/058728
(87) International publication number: WO 2013/160450

(56) References cited:
- WO-A1-2012/025699
- US-A- 3 459 708
- RAFA? CZARNECKI ET AL: "H2O2 as a modifier of phenol-formaldehyde resin used in the production of particleboards", JOURNAL OF APPLIED POLYMER SCIENCE, vol. 88, no. 14, 28 June 2003 (2003-06-28) , pages 3084-3092, XP055042302, ISSN: 0021-8995, DOI: 10.1002/app.11962
- DATABASE WPI Week 200914 Thomson Scientific, London, GB; AN 2009-A98612 XP002686198, -& CN 101 250 382 A (UNIV WUHAN SCI&TECHNOLOGY) 27 August 2008 (2008-08-27)

## Description

The present invention relates to a method of reducing the content of free formaldehyde in phenol-formaldehyde resins. The present invention further relates to the phenol-formaldehyde resin resulting from this process and its use as a binder in the manufacture of mineral wool insulation products of low formaldehyde emissions.

### State of the Art

The mineral wool products have traditionally being manufactured by welding glass fibers by means of phenol-formaldehyde resins, profiting from a relatively low cost and the good mechanical properties, stability and water resistance granted to the finished products. Most common phenol-formaldehyde resins for mineral wool production are *resols* manufactured by condensation of formaldehyde and phenol catalyzed by strong alkalis and using a large molar excess of the formaldehyde. These resins contain from about 45 to about 55 % weight solid content in water, and from about 2 to 8 weight % of free formaldehyde.

For a good processability, these phenol-formaldehyde resins should have a good stability, good dilutability with water, normally above 20 times measured by the method ISO 8989 method, a viscosity below 100 mPa.s to facilitate the application on the glass fibers, and a suitable curing rate, between 3-15 minutes measured by the B-time method ISO 8987 method. Preferably, the resins shall have a pH greater than 7 to avoid or minimize potential corrosion issues on carbon steel equipment. This combination of requirements is specific for the glass wool industry. In order to fulfill these requirements, the resols must be prepared in a definite manner, for example by using low amounts of alkali catalysts, low temperatures, and short reactions times. These specific reaction conditions have the objective that the level of condensation of the phenol-formaldehyde resin obtained is low.

Both the viscosity and the dilutability with water of the resin are related properties, and are an indication of its level of condensation. In fact, in the preparation of the resin, these parameters are frequently monitored online by the manufacturers to determine when the reaction needs to be stopped, depending on the intended application for the resin. The higher the viscosity and the lower the dilutability with water, the higher the condensation degree of the phenol-formaldehyde resin.

Resins intended to be used in applications different than glass wool binders, e.g. for bonding wood materials, require a different set of resin characteristics which makes their use in this application more favorable. Thus, for the wood industry, the resins in most cases need to have significantly higher viscosity and thus low water dilutability, what requires different resin preparation conditions.

As recognized in the recent years, the main drawback of the phenol-formaldehyde resins used in the glass wool industry is the slow release of formaldehyde in finished products to the environment, contributing to worsen the indoor air quality; hence there is a great desire of producing phenol-formaldehyde resins with a low free FA content, helping to reduce emissions of formaldehyde from mineral wool products. Different methods to reduce free formaldehyde in phenolic resins have been described.

One group of methods refers to the use of formaldehyde scavengers which reacts with the free formaldehyde in the resin. Urea serves furthermore as extender (it extends the resin or binder). For instance, EP 0 148 050 A1 describes the use of urea as formaldehyde scavenger by formation of formaldehyde-urea condensates. The resulting PFU (phenol-formaldehyde-urea) resins are called "premix". This method is useful to decrease the level of free formaldehyde in phenol-formaldehyde resins. Nevertheless the formed adducts can reversibly regenerate free formaldehyde during the curing process of the resin and/or the after curing due to the aging. Furthermore, the US 2011/111226 A1 describes the use of substances with active methylene groups as formaldehyde scavengers. These methods are also useful to the goal of reducing free formaldehyde. However, the required reaction conditions are harsh, leading to higher condensation in the resin which may then suffer from reduced stability, higher viscosity and low water dilutability.

A second set of solutions consists of the use of a compound able to form condensates with both phenol and formaldehyde. In these cases, the compound able to condensate with phenol and formaldehyde is also incorporated into the resin network, i.e. it becomes chemically bonded to the polymeric structure. For example, WO 2008/043961 A1 describes the use of monoethanolamine that reacts with free formaldehyde and phenol via Mannich reaction. It is described that this method decreases the free formaldehyde in the resin. However, it requires the use of relatively high temperatures, normally around 60 °C, what makes the resin condensates to acquire a high degree of condensation during the process. Consequently, the thermal stability of the resins is seriously compromised and they tend to generate precipitates over time. Further, their dilutability in water is also significantly reduced, complicating their processability in the mineral wool manufacturing plants. A way to increase the stability of such high condensed resins would be to reduce their pH by means of organic acids such as sulfamic acid. However, such low pH has negative effects on carbon steel plant installations due to corrosion and requires expensive investments to upgrade installations with stainless steel materials.

Furthermore, the method described in WO 2012/25699 A1 relates to a method for reducing free formaldehyde in resins using glycine as formaldehyde scavenger. The latter overcomes the need of using the acid to achieve resin stabilization but the process still requires relatively high reaction temperatures, compromising the practicable stabilities, low viscosities and high water dilutability of the resin, and making the process difficult to undertake in glass wool manufacturing plants. As with monoethanolamine, glycine reacts forming condensates with formaldehyde and with phenol, and becomes chemically attached to the resin chemical structure.

A third group of solutions consist of the treatment of the mineral wool product with formaldehyde scavengers which reacts with the free formaldehyde being issued from the fleece. For instance, the method described in WO 2008/005635 A2 consists of the use of sodium bisulfite, sodium metabisulfite and tetraethylenepentamine as formaldehyde scavengers. Another method disclosed in WO 2011/148076 A1 consists of the use of dihydrazides as formaldehyde scavengers. These methods can decrease the measured emissions of formaldehyde from mineral wool products although the efficiency is limited. Additionally, the use of hydrazides is significantly limited due to its hazardousness, difficulty in handling and price.

### Description of the invention

It is an object of the present invention to provide a new process for reducing the content of free formaldehyde in a phenol-formaldehyde resin to an amount below 0.5 weight % measured by method ISO 11402 without detrimentally affecting the other characteristics of the resin. This process has the advantage that it effectively reduces the content of free formaldehyde in the phenol-formaldehyde resin but, at the same time, does not significantly impact the stability, dilutability in water, viscosity and reactivity of the phenol-formaldehyde-resin used as starting material. The resulting resin is still very suitable for the use in the glass wool industry. Moreover, the process can be undertaken with good efficiencies at a pH in the range of 7 or higher, in particular in the range of 7 to 10.

In contrast to the formaldehyde reducing processes described in the art, the process of the present invention is particularly valuable in the manufacture of binders used for glass wool insulation products because:
(1) The treatment of the phenol-formaldehyde resin involves easy to handle and inexpensive chemicals, and can be undertaken at around ambient temperature at a suitable rate. Consequently, the process can be done at the own glass wool manufacturing premises without major investments, and the resulting resin can be consumed in situ, avoiding long storage and transportation stability requirements; and
(2) The unwanted corrosion damage of carbon steel production equipment can be minimized due to the high pH of the resulting resin.
(3) The characteristics of the resin obtained after the treatment make it highly suitable for the preparation of a binder for use in the glass wool industry.

It is a further object of the present invention to provide a novel phenol-formaldehyde resin that has a low amount of free formaldehyde, is non-corrosive, shows excellent reactivity and excellent suitability for its use as a binder of mineral wool products.

According to the present invention, the process for reducing the content of free formaldehyde in phenol-formaldehyde resins is as defined in claim 1 and comprises the step of treating a phenol-formaldehyde resin with at least one oxidizing agent, wherein the pH of the phenol-formaldehyde resin starting material and the resin obtained after the treatment is 7 or higher, in particular 7-10, a dilutability of more than 20 times in demineralized water, a viscosity lower than 100 mPa.s at 20 °C, and a curing B-time between 3-15 minutes.

The phenol-formaldehyde resin that is used as a starting material for the process of the present invention is a *resol* with a relatively low condensation level, produced by condensation of formaldehyde and phenol in a formaldehyde:phenol molar ratio greater than 1.1, preferably greater than 1.8 and more preferably greater than 2. Usually, the formaldehyde:phenol molar ratio in the phenol-formaldehyde used as starting material in the process of the present invention is not greater than 3. The condensation process for preparing the phenol-formaldehyde resin starting materials is usually catalyzed by NaOH, KOH or Ca(OH)₂ most preferably NaOH. The pH of the phenol-formaldehyde resin starting material is usually from 7 to 10.

According to a preferred embodiment, the phenol-formaldehyde resin used as a starting material is an aqueous solution composed of from 5 to 70 weight %, more preferable from 40 to 65 weight %, and most preferably from 45 to 55 % weight of said phenol-formaldehyde *resol* condensates.

According to an even more preferred embodiment, the phenol-formaldehyde resin used as a starting material in the present invention contains from about 5 to 8.5% weight of free formaldehyde, determined by the method ISO 11402. Such resin is characterized in that it has viscosity lower than 100 mPa.s at 20 °C (at a resin concentration having a solid content of 40 wt.-%) and that it can be diluted with more than 10 parts of demineralized water, in particular more than 20 parts, determined by the method ISO 8989. This is normally referred as `infinite' dilutability in water. Particular examples of preferred phenol-formaldehyde resins used as a starting material in the present invention are Bakelite PF 1230V from Momentive or Borofen B-1606A supplied by Fenolit.

The oxidizing agent may be any oxidizing agent that is known in the art and that is able to oxidize formaldehyde. Preferably, the oxidizing agent is selected from the group consisting of hydrogen peroxide, alkali and earth alkaline metal peroxide salts, alkali metal and ammonium persulfate, alkali metal and ammonium percarbonates, alkali metal and ammonium perborates, organic peroxyacids and their alkali metal and ammonium salts, sodium hypochlorite, chlorine, bromine, iodine, oxygen, ozone and mixtures thereof. It is especially preferred to use hydrogen peroxide, sodium percarbonate, sodium perborate, peracetic acid or performic acid as the oxidizing agent. Moreover, it is particularly preferred to use as an oxidizing agent a solution of hydrogen peroxide of about 30 weight %. Hydrogen peroxide is most preferred due to the suitability of its redox potential to selectively oxidize formaldehyde, the relatively easy dosing and handling, and affordable cost. These oxidizing agents may be used alone or in combination of two or more.

The amount of oxidizing agent is from 1 to 3 mol of oxidizing agent per mol of free formaldehyde in the phenol-formaldehyde resin used as starting material, preferably from 2 to 2.5 mol of oxidizing agent per mol of free formaldehyde in the phenol-formaldehyde resin used as starting material. This amount of oxidizing agent is very suitable to achieve the oxidation of the free formaldehyde in the phenol-formaldehyde resin without deteriorating the reactivity of the resin.

The process of the present invention is to be carried out at a temperature of 5 to 60 °C, preferable from 15 to 45 °C, and most preferably from 20 to 30 °C. At this temperature the oxidation of the free formaldehyde occurs at reasonable rate without deteriorating the resin.

The temperature during the process for reducing the content of free formaldehyde in a phenol-formaldehyde resin should not be raised above a temperature of 60°C to avoid deterioration of the characteristics of the resulting phenol-formaldehyde resin, such as reactivity, viscosity and dilutability. In view of the properties of the resulting resin it is particularly preferred that the process of the present invention does not include a process step wherein the temperature is raised above 50°C, more preferably not above 40 °C and most preferred not above 30°C.

The contact time of the phenol-formaldehyde resin with the oxidizing agent is not particularly limited. However, it is suitable to use a contact period of 1 to 180 minutes, more preferable for about 10 minutes and 120 minutes, and most preferably from 30 to 90 minutes.

During the process of the present invention the pH shall be kept at pH 7 or above to better control the rate and selectivity of the oxidation and to avoid corrosion of carbon steel equipment down the manufacturing line. The pH may naturally decrease due to the formation of formic acid and/or CO₂, but usually it stays higher than pH 7. However, if necessary, the pH may be increased by means of the concomitant addition of a diluted NaOH solution.

In the case of hydrogen peroxide, the inventors surprisingly found a pH between 7.5 and 8.5 to particularly suitable.

The phenol-formaldehyde resin that is obtained by the process according to the present invention has a content of free formaldehyde of below 0.5 weight %, measured according to the ISO 11402 method. The viscosity of the resulting phenol-formaldehyde resin is below 100 mPa.s at 20 °C (e.g. measured with a Brookfield viscometer, spindle 1, 60 rpm). Furthermore, the phenol-formaldehyde resin obtained by the process according to the present invention has an excellent dilutability in water measured by ISO 8989 method of more than 20 times in demineralized water at 20 °C. The resulting phenol-formaldehyde resin has also an excellent curing behavior in terms of B-time, as determined by the B-time method (ISO 8987). More particularly, the B-time of the resulting resin is in the range of 3 to 15 minutes which is in the same range compared to the untreated phenol-formaldehyde resin, i.e. the phenol-formaldehyde resin used as starting material. Finally, the resulting phenol-formaldehyde resin shows negligible impact on corrosion of carbon steel equipment down the manufacturing line due to its pH of 7 or higher, in particular due to its pH of 7-10.

A particularly suitable mode of carrying out the method of the invention is to select a starting resin suitable for use in the preparation of a binder for glass wool, having with a pH of 7 to 10, a dilutability with water of more than 20 times and a viscosity lower than 100 mPa.s at 20°C (at a resin concentration having a solid content of 40 wt.-%) and to determine its free formaldehyde content according to the method ISO 11402. Then, starting resin is treated with 1 to 3 mol of at least one oxidizing agent per mol of free formaldehyde in the starting resin. The at least one oxidizing agent is selected from the group of hydrogen peroxide, sodium percarbonate, sodium perborate, paracetic acid or performic acid, and more preferably hydrogen peroxide. The treatment is carried out at a temperature from 20-30°C. The resin obtained after treatment, despite having a reduced amount of free formaldehyde below 0.5% weight according to ISO 11402, maintains the characteristics making it suitable for use in the preparation of a binder for glass wool: good stability and reactivity, a pH from 7-10, water dilutability of more than 20 times, and a viscosity lower than 100 mPa.s at 20°C.

A particular feature of the process of the present invention is that the phenol-formaldehyde condensates contained in the resulting phenol-formaldehyde resin do not contain any other components than phenol and formaldehyde, i.e. the condensates in the phenol-formaldehyde resin essentially consist of phenol and formaldehyde. This is due to the fact that the oxidating agent reacts with free formaldehyde and decreases its concentration in the resin, but neither the oxidating agents nor the products resulting from the oxidation reaction are chemically bonded with the resin network structure, as it happens with other formaldehyde scavengers known in the art. Also, the method of the invention produces phenol-formaldehyde resins with low formaldehyde content which do not contain urea or PFU condensates.

The phenol-formaldehyde resin as obtained by the process according to the present invention described above is to be used for the preparation of a binder composition for fibrous substrates, particularly mineral wool fibers, by the methods known in the art. Such a binder composition for mineral wool fibers comprises the phenol-formaldehyde resin as obtained by the process according to the present invention and at least one additive such as, but not limited to, urea, latent acid catalysts such as ammonium sulfate, sodium bisulfite, hydrophobizing agent such as silicones, de-dusting agent such as paraffin oils, adhesion promoter agent such as silanes, fiber softener, dyes and corrosion inhibitors. It is preferred that said composition additionally comprises of at least one chain extender such as, but not limited to, sugars, molasses, starches and modified starches, lignosulfonates or tannins. The binder composition for mineral wool fibers is applied onto mineral wool by e.g. spraying or impregnating the fibers, with subsequent heat treatment of the so-prepared mineral fiber product. The heat treatment is common in the art and for curing of the binder temperatures of more than 150°C are usually applied.

The resulting mineral wool fiber products show a formaldehyde emission below 20 µg/m³ (method ISO 16000-3), more preferable lower than 15 µg/m³ and most preferable lower than 10 µg/m³.

The mineral wool product may comprise at least additional facing made of paper, aluminum, glass veil or mixtures thereof. The mineral wool obtained may be used for thermal or acoustic insulation purposes in buildings, conducts, particularly air-conditioning conducts, electrical appliances, ships, aircrafts and spaceships.

Through the description of the invention, reference is made to different test methods to determine certain characteristics of the resins, the binder or the mineral wool products. At least that otherwise specified, these methods refer to the following general descriptions:
Viscosity of the aqueous resin is measured with a Brookfield viscosimeter, spindle 1, at 60 rpm and 20°C. The viscosity ranges referred through the description refer to resin concentrations of 40 wt.-% solid content.

The free formaldehyde content of the resin is measured according to the international standard ISO 11402, version year 2004(E), using the hydroxylamine hydrochloride procedure. This method involves the following general principle: The formaldehyde present in the resin is converted to the oxime with hydroxylamine hydrochloride. Then the hydrochloric acid formed during this reaction is determined by potentiometric back-titration, using a sodium hydroxide solution.

Resin dilutability in demineralized water is measured at 20°C according to the international standard ISO 8989 method, version year 1995(E). Resin dilutability is a measure of the mass of water needed to obtain turbidity in the liquid resin. This method involves adding water to the resin until turbidity persists for a minimum of 30 s after agitation.

Curing B-Time of the resin is measured at 130°C according to the international standard ISO 8987, version year 2005(E). In this method, the condensation of the phenol-formaldehyde resin is carried out to the B-stage in one heated test plate. The B-transformation time point is reached when a stirring rod is briefly raised from the resin and resin threads from the rod break.

### Example

A 1-L round bottom flask equipped with a mechanical stirred and a thermostatic bath, was charged with 150 grams of phenol-formaldehyde resin Borofen B-1606A supplied by Fenolit, of 47 weight % solids. The content of free formaldehyde of this resin measured with the method ISO 11402 was 6.91 weight % (0.345 mol). The solution is then treated with 80 grams of hydrogen peroxide at 30 weight % (0.70 mol) in water. The mixture is then stirred at 25 °C for 60 minutes obtaining a pale yellow solution of Resin A. The main properties of the produced resins are in the Table 1.

**Table 1: Properties of phenol-formaldehyde resin with reduced content of free formaldehyde**

| | Untreated Resin | Resin A |
|---|---|---|
| Free formaldehyde (% weight) ⁽¹⁾ | 6, 9 (ref) | 0,40 |
| Dilutability in water (times) ⁽²⁾ | >20 | >20 |
| pH | 8.9 | 7.0 |
| Corrosion carbon steel (mm/year) ⁽⁷⁾ | < 0.1 | < 0.1 |
| Viscosity (mPa.s) ⁽³⁾ | 30 | 10 |
| B-time (min) ⁽⁴⁾ | 7.5 | 7.0 |
| Modulus of impregnated glass paper (N.m²) ⁽⁵⁾ | 628 | 610 |
| Modulus of impregnated glass paper after aging (N.m²) ⁽⁶⁾ | 524 | 497 |

| | | |
|---|---|---|
| (1) ISO 11402 (2) ISO 89.89 (3) measured with a Brookfiled viscometer, spindle 1, 60 rpm, at 20 °C (4) ISO 8987 (5) Concentration of impregnation resin solution is 20% weight solids. The impregnation resin solution contains 2.6 weight % ammonium sulfate based on dry mixture weight resin plus ammonium sulfate. Cured 3 min at 170 °C. (6) Method in (5) followed by immersion in water for 10 min at 85 °C, then air-dried. (7) Corrosion carbon steel is measured with the resin according to ASTM G1-03 method. | | |

## Claims

1. A process for reducing the content of free formaldehyde in a phenol-formaldehyde resin starting material, comprising the step of treating the phenol-formaldehyde resin starting material with at least one oxidizing agent, wherein the amount of oxidizing agent is 1 to 3 mol oxidizing agent per mol of free formaldehyde in the phenol-formaldehyde resin used as starting material, and wherein the pH of the phenol-formaldehyde resin starting material and the resin obtained after the treatment is 7 or higher, the dilutability is more than 20 times in demineralized water, the viscosity is lower than 100 mPa·s at 20 °C, and the curing B-time is between 3-15 minutes, wherein the dilutability, viscosity and curring B-time are determined as described herein, and wherein the process is carried out at a temperature of 5 to 60 °C.

2. The process according to claim 1, wherein the said oxidizing agent is selected from one or more of hydrogen peroxide, ammonium persulfate, sodium percarbonate, sodium perborate, peracetic acid and performic acid.

3. The process according to claim 1 or 2, wherein the process is carried out at a temperature of 15 to 45 °C.

4. The process according to claim 3, wherein the process is carried out at a temperature of 20 to 30 °C.

5. The process according to any one of claims 1-4 wherein the time of said treatment is 1 to 180 minutes.

6. A phenol-formaldehyde resin **characterized in that**:
- the free formaldehyde content is lower than 0.5 weight-% determined according to ISO 11402;
- the pH is in the range of 7 to 10;
- the dilutability is more than 20 times in demineralized water at 20 °C;
- the viscosity is below 100 mPa·s at 20°C, and
- the phenol-formaldehyde condensates, contained in the resin, consist of phenol and formaldehyde
wherein the dilutability and the viscosity are determined as described herein.

7. Use of the phenol-formaldehyde resin according to claim 6 for the preparation of a binder composition for mineral wool products.

8. A mineral wool product produced with the phenol-formaldehyde resin according to claim 6.

9. The use of mineral wool product according to claim 8 for thermal or acoustic insulation purposes in buildings, conducts, electrical appliances, ships, aircrafts and spaceships.

## Patentansprüche

1. Verfahren zum Reduzieren des Gehalts an freiem Formaldehyd in einem Phenol-Formaldehydharz-Startmaterial, umfassend den Schritt des Behandelns des Phenol-Formaldehydharz-Startmaterials mit wenigstens einem Oxidationsmittel, wobei die Menge an Oxidationsmittel 1 bis 3 mol Oxidationsmittel pro Mol an freiem Formaldehyd in dem als Startmaterial verwendete Phenol-Formaldehydharz beträgt und wobei der pH-Wert des Phenol-Formaldehydharz-Startmaterials und des nach der Behandlung erhaltenen Harzes 7 oder höher ist, die Verdünnbarkeit mehr als 20-fach in demineralisiertem Wasser ist, die Viskosität tiefer als 100 mPa.s bei 20°C ist und die Aushärtungs-B-Zeit zwischen 3-15 Minuten ist, wobei die Verdünnbarkeit, Viskosität und Aushärtungs-B-Zeit wie vorliegend beschrieben gemessen werden, und wobei das Verfahren bei einer Temperatur von 5 bis 60°C durchgeführt wird.

2. Verfahren gemäß Anspruch 1, wobei das Oxidationsmittel aus einem oder mehreren von Wasserstoffperoxid, Ammoniumpersulfat, Natriumpercarbonat, Natriumperborat, Peressigsäure und Perameisensäure ausgewählt wird.

3. Verfahren gemäß Anspruch 1 oder 2, wobei das Verfahren bei einer Temperatur von 15 bis 45°C durchgeführt wird.

4. Verfahren gemäß Anspruch 3, wobei das Verfahren bei einer Temperatur von 20 bis 30°C durchgeführt wird.

5. Verfahren gemäß einem der Ansprüche 1 bis 4, wobei die Dauer der genannten Behandlung 1 bis 180 Minuten beträgt.

6. Phenol-Formaldehydharz, **dadurch gekennzeichnet, dass**:
- der freie Formaldehyd-Gehalt tiefer als 0,5 Gew.% ist, bestimmt gemäß ISO 11402;
- der pH-Wert im Bereich von 7 bis 10 ist;
- die Verdünnbarkeit mehr als 20-fach in deminderalisiertem Wasser bei 20°C ist;
- die Viskosität unter 100 mPa.s bei 20°C ist und
- die im Harz enthaltenen Phenol-Formaldehydkondensate aus Phenol und Formaldehyd bestehen,
wobei die Verdünnbarkeit und die Viskosität wie vorliegend beschrieben bestimmt werden.

7. Verwendung des Phenol-Formaldehydharzes gemäß Anspruch 6 zur Herstellung einer Bindemittelzusammensetzung für Mineralwolleprodukte.

8. Mineralwolleprodukt, hergestellt mit dem Phneolformaldehydharz gemäß Anspruch 6.

9. Verwendung eines Mineralwolleproduktes gemäß Anspruch 8 zu thermischen oder akustischen Isolierungszwecken in Gebäuden, Leitungen, elektrischen Vorrichtungen, Schiffen, Flugzeugen und Raumschiffen.

## Revendications

1. Procédé pour réduire la teneur en formaldéhyde libre dans une matière première de résine de phénol-formaldéhyde, comprenant l'étape de traiter la matière première de résine de phénol-formaldéhyde avec au moins un agent oxydant, dans lequel la quantité d'agent oxydant est de 1 à 3 moles d'agent oxydant par mol de formaldéhyde libre dans la résine de phénol-formaldéhyde utilisée comme matière première, et dans lequel le pH de la matière première de résine de phénol-formaldéhyde et de la résine obtenue après le traitement est 7 ou plus, l'aptitude à la dilution est supérieure à 20 fois dans de l'eau déminéralisée, la viscosité est inférieure à 100 mPa.s à 20°C, et le temps de durcissement B se situe entre 3 et 15 minutes, dans lequel l'aptitude à la dilution, la viscosité et le temps de durcissement B sont déterminés comme décrit ici, et dans lequel le procédé est mis en oeuvre à une température allant de 5 à 60°C.

2. Procédé selon la revendication 1, dans lequel ledit agent oxydant est choisi parmi un ou plusieurs éléments parmi peroxyde d'hydrogène, persulfate d'ammonium, percarbonate de sodium, perborate de sodium, acide peracétique et acide performique.

3. Procédé selon la revendication 1 ou 2, dans lequel le procédé est mis en oeuvre à une température allant de 15 à 45°C.

4. Procédé selon la revendication 3, dans lequel le procédé est mis en oeuvre à une température allant de 20 à 30°C.

5. Procédé selon l'une quelconque des revendications 1-4, dans lequel la durée dudit traitement est de 1 à 180 minutes.

6. Résine de phénol-formaldéhyde, **caractérisée en ce que** :
- la teneur en formaldéhyde libre est inférieure à 0,5 % en poids, déterminée selon la norme ISO 11402 ;
- le pH se situe dans la plage de 7 à 10 ;
- l'aptitude à la dilution est supérieure à 20 fois dans de l'eau déminéralisée à 20°C ;
- la viscosité est inférieure à 100 mPa.s à 20°C, et
- les condensats de phénol-formaldéhyde, contenus dans la résine, sont constitués de phénol et de formaldéhyde,
dans laquelle l'aptitude à la dilution et la viscosité sont déterminées comme décrit dans la présente description.

7. Utilisation de la résine de phénol-formaldéhyde selon la revendication 6 pour la préparation d'une composition de liant pour des produits en laine minérale.

8. Produit en laine minérale fabriqué avec la résine de phénol-formaldéhyde selon la revendication 6.

9. Utilisation d'un produit en laine minérale selon la revendication 8 à des fins d'isolation thermique ou phonique dans des bâtiments, des conduits, des appareils électriques, des navires, des avions et des vaisseaux spatiaux.
